# EUROPEAN PATENT SPECIFICATION

(11) **EP 3 919 362 B1**
(45) Date of publication and mention of the grant of the patent: **15.03.2023**
(21) Application number: 20177716.6
(22) Date of filing: 01.06.2020
(51) Int. Cl.: B62L 1/00, F16D 55/22, F16D 65/18

(54) **MULTI-ROD DISC BRAKE**
MEHRSTANGEN-LAMELLENBREMSE
FREIN À DISQUE MULTI-TIGES

(43) Date of publication of application: 08.12.2021
(73) Proprietor: Lin, Chang Hui, Changhu (TW)
(72) Inventor: LIN, Liang Wei, Changhu (TW)
(74) Representative: Cabinet Chaillot

(56) References cited:
- DE-U- 1 906 698
- GB-A- 2 217 408
- JP-A- 2011 102 063
- US-A- 3 680 663

## Description

### FIELD OF THE INVENTION

The present invention relates to a multiple-rod disc brake which stops the bicycle easily and quickly.

### BACKGROUND OF THE INVENTION

A conventional brake shoe of a bicycle is applied to engage with a wheel rim of the bicycle. However, two symmetrical clamp arms of a brake mechanism of the brake shoe cannot engage the wheel rim of the bicycle evenly, and the brake shoe on each of the two symmetrical clamp arms cannot clamp the wheel rim equally, thus making noisily and wearing the brake shoe greatly.

To overcome above-mentioned problem, a clamp structure of a disc brake is disclosed in TW Utility Model M466835 and contains two pads, and each pad has a concaved portion defined on a top thereof and has two feet extending from a bottom of each pad. When two screw bolts are inserted through the two pads respectively and a locking element is locked on a front fork of the bicycle, the two feet are retained into an oval orifice of the clamp structure, and each screw bolt abuts against the concaved portion of each pad so that each pad cannot rotate with respect to the oval orifice by ways of each foot. However, the clamp structure cannot stop the bicycle easily.

US3680663 A, which is considered as closest prior art, discloses a brake disk rotatable in synchronism with a wheel and arranged adjacent a bicycle frame to which a pair of brake arms constituting a force doubling mechanism substantially operable by a single lever are mounted to be swung at both sides of said brake disk, said brake arms being provided in one end with a pair of brake shoes and in the other end with a link device constituting a force doubling mechanism substantially operable by a toggle joint, and said link device being operable by wire rope means in the manner of securing the most reliable and effective braking contact of said brake shoes upon the brake disk with light manipulation touch.

JP2011102063A discloses that a caliper type brake produces braking force by sandwiching the rim of a wheel from the right and left, and includes a pair of arm parts, brake shoes, a pedestal part for respectively rockably supporting the arm parts, an energizing member for respectively energizing the arm parts so that the brake shoes separate from the rim, and an expanding mechanism installed between upper end parts of the arm parts and pushing the brake shoes against the rim by rocking the arm parts so that the upper end parts mutually expand to open when transmitting brake operation force, wherein the expanding mechanism has a pipe body connecting part connected with a pipe body for guiding a transmission body from the brake lever, and provides a brake for the bicycle rotatably installed around the axis S of connecting the mutual upper end parts of a pair of arm parts.

GB2217408A discloses that a brake mechanism, particularly for bicycles, comprises a hinged quadrilateral of members upon which a sheathed cable operates. The quadrilateral arrangement of members in turn operate upon levers upon which brake blocks are mounted which grip the wheel rim when the brake is applied. The brake may be released by a compression or tension spring acting between the members or by torsion springs each associated with a respective lever.

DE1906698U discloses a disc brake for shaft hoisting machines and reels with parallel-guided brake shoes and a housing that radially surrounds the brake disc from the outer edge. The aim of the innovation is to create a brake which, in the same design adapted to the forces to be braked, can be used both as a combined driving and safety brake and as an exhaust brake with the known advantages of disc brakes. According to the innovation, the disc brake is equipped with parallel brake shoes and a housing that radially surrounds the brake disc from the outer edge and on which a lever linkage is mounted that transmits the braking force generated by a compression spring and/or in a brake cylinder to the brake shoes. One with both a compression spring and a brake cylinder is particularly suitable as a driving and safety brake, while a brake of the same type with only one braking force generator, preferably a compression spring, can be used for exhaust braking. Such an outlet brake is not only suitable for shaft hoisting machines and reels, but also for other hoist.

The present invention has arisen to mitigate and/or obviate the afore-described disadvantages.

### SUMMARY OF THE INVENTION

The primary objective of the present invention is to provide a multiple-rod disc brake by which the brake cable is driven to actuate the connection rod of the multiple-rod structure, and the respective swing arm of the brake unit is driven by the connection rod to actuate the respective piston to engage with the stop disc, thus stopping the bicycle easily and quickly.

To obtain above-mentioned objective, a multi-rod disc brake contains: a brake unit including a locking structure which has two symmetrical bases, two symmetrical swing arms, two symmetrical wear resistant sleeves, and two symmetrical pistons. An accommodation chamber is defined between the two pistons to accommodate a stop disc.

A respective base is rotatably connected with a first rotary shaft of a respective swing arm and accommodates a respective wear resistant sleeve, the respective wear resistant sleeve movably accommodates a respective piston, an end of the respective swing arm is rotatably connected with the respective piston by a first screw bolt so that the respective swing arm actuates the respective piston to move in the respective wear resistant sleeve reciprocately; and the respective swing arm has a second rotary shaft mounted on another end thereof.

A drive unit includes a multiple-rod structure mounted on the second rotary shaft of the respective swing arm, wherein the second rotary shaft is rotatably connected with a second screw bolt, the second screw bolt is rotatably connected with a connecting portion of a first end of a connection rod so that the respective swing arm actuates the connection rod to swing via the second rotary shaft, wherein a second end of the connection rod is rotatably connected with a respective third rotary shaft of two third rotary shafts. The respective third rotary shaft has a second locating orifice defined on a central section thereof, and the second locating orifice of the respective third rotary shaft is connected with a first extension of a first joining cable or a second extension of a second joining cable, wherein each of the first extension and the second extension is connected with a resilient element, the first joining cable has a first receiving orifice, and the second joining cable has a second receiving orifice, such that a brake cable is inserted through the first receiving orifice and the second receiving orifice to be fixed by a fixing element.

### BRIEF DESCRIPTION OF THE DRAWINGS

FIG. 1 is a perspective view showing the assembly of a multi-rod disc brake according to a preferred embodiment of the present invention.
FIG. 2 is a side plane view showing the assembly of a drive unit of the multi-rod disc brake according to the preferred embodiment of the present invention.
FIG. 3 is a cross sectional view showing the assembly of a brake unit of the multi-rod disc brake according to the preferred embodiment of the present invention.
FIG. 4 is a side plan view showing the operation of the drive unit of the multi-rod disc brake according to the preferred embodiment of the present invention.
FIG. 5 is a cross sectional view showing the operation of the brake unit of the multi-rod disc brake according to the preferred embodiment of the present invention.
FIG. 6 is a cross sectional view showing the application of the multi-rod disc brake according to the preferred embodiment of the present invention.

### DETAILED DESCRIPTION OF THE PREFERRED EMBODIMENTS

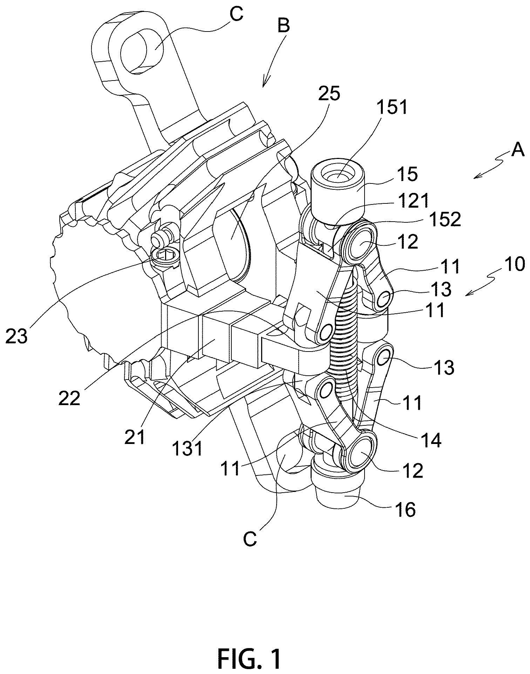

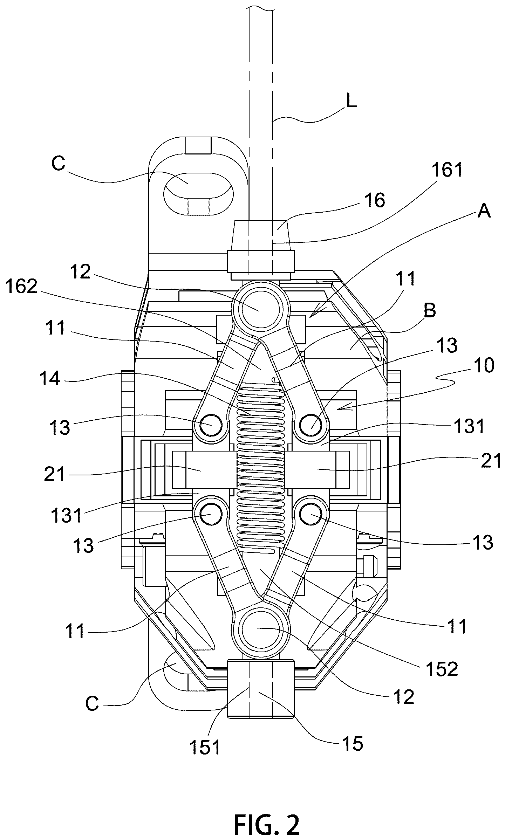

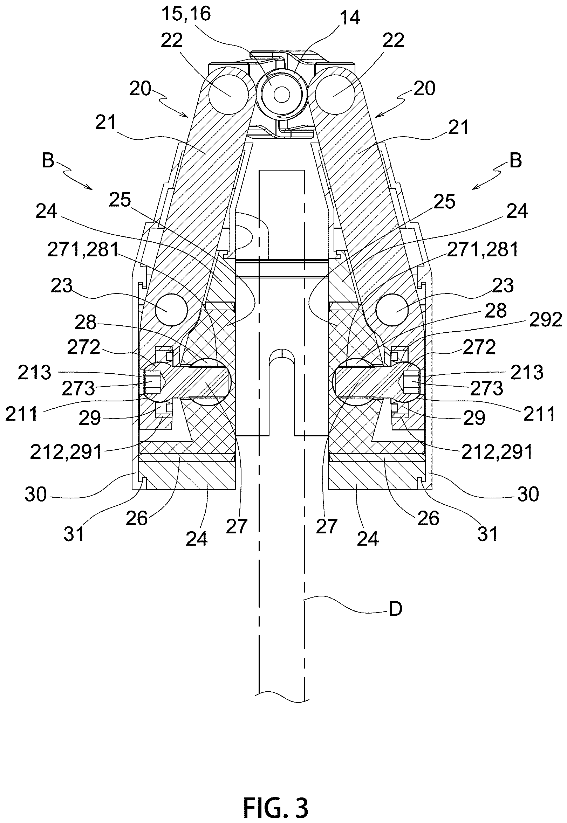

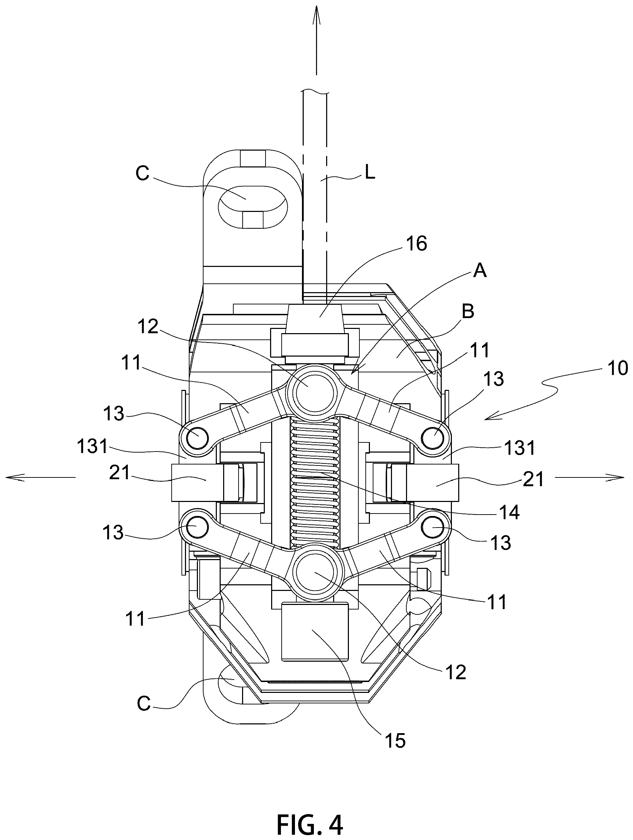

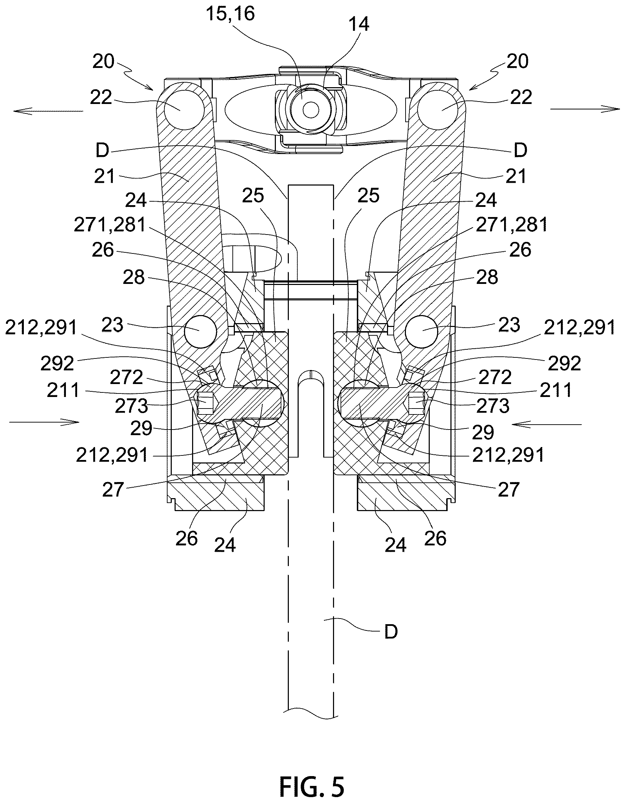

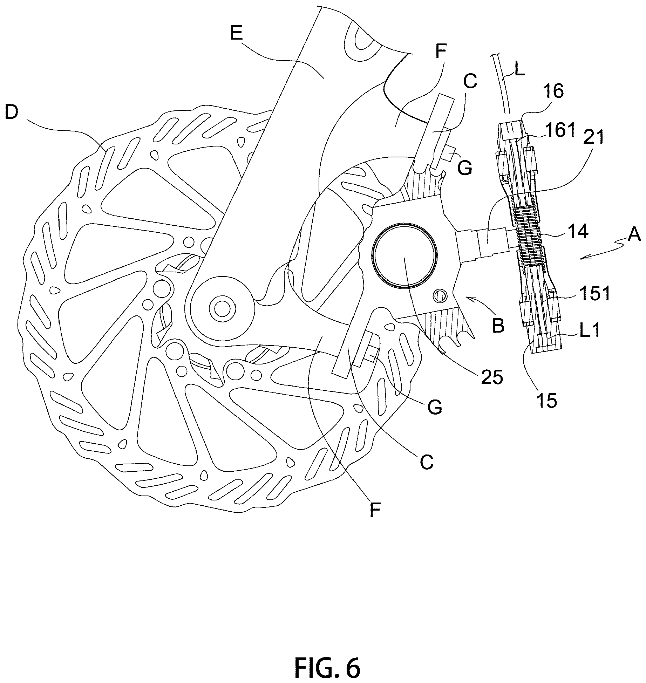

With reference to FIGS. 1-6, a multi-rod disc brake according to a preferred embodiment of the present invention comprises:
a brake unit B, the brake unit B including a locking structure 20, and the locking structure 20 having two symmetrical bases 24, two symmetrical swing arms 21, two symmetrical wear resistant sleeves 26, and two symmetrical pistons 25, wherein an accommodation chamber is defined between the two pistons 25 to accommodate a stop disc D;
wherein a respective base 24 is rotatably connected with a first rotary shaft 23 of a respective swing arm 21 and accommodates a respective wear resistant sleeve 26, the respective wear resistant sleeve 26 movably accommodates a respective piston 25, an end of the respective swing arm 21 is rotatably connected with the respective piston 25 by a first screw bolt 27 so that the respective swing arm 21 actuates the respective piston 25 to move in the respective wear resistant sleeve 26 reciprocately; and the respective swing arm 21 has a second rotary shaft 22 mounted on another end thereof;
two first locating orifices C extending beside the two symmetrical bases 24 respectively so as to be connected on a connection position F on a rear fork E of a bicycle by ways of a coupling element G;
a drive unit A including a multiple-rod structure 10 mounted on the second rotary shaft 22 of the respective swing arm 21, wherein the second rotary shaft 22 is rotatably connected with a second screw bolt 131, the second screw bolt 131 is rotatably connected with a connecting portion 13 of a first end of a connection rod 11 so that the respective swing arm 21 actuates the connection rod 11 to swing via the second rotary shaft 22, wherein a second end of the connection rod 11 is rotatably connected with a respective third rotary shaft 12 of two third rotary shafts 12, the respective third rotary shaft 12 has a second locating orifice 121 defined on a central section thereof, and the second locating orifice 121 of the respective third rotary shaft 12 is connected with a first extension 152 of a first joining cable 15 or a second extension 162 of a second joining cable 16, wherein each of the first extension 152 and the second extension 162 is connected with a resilient element 14, the first joining cable 15 has a first receiving orifice 151, and the second joining cable 16 has a second receiving orifice 161, such that a brake cable L is inserted through the first receiving orifice 151 and the second receiving orifice 161 to be fixed by a fixing element L1. Thereby, the resilient element 14 urges the brake cable L to drive the connection rod 11 to extend or retract. When the brake cable L actuates the connection rod 11 of the multiple-rod structure 10, the respective swing arm 21 of the brake unit B is driven by the connection rod 11 to actuate the respective piston 25 to engage with the stop disc D, thus stopping the bicycle easily and quickly.

The respective piston 25 has an actuation knob 28 received therein, and the actuation knob 28 has a threaded recess 281 defined on a side thereof and configured to screw with outer threads of the first screw bolt 27, wherein the first screw bolt 27 has a notch 273 defined on an end thereof, and the respective swing arm 21 has a third locating orifice 213 corresponding to the notch 273, the first screw bolt 27 further has a movable knob 272 fixed on another end thereof, and the respective swing arm 21 has a spherical trough 211 rotatably connected with the movable knob 272 of the first screw bolt 27.

A screw nut 29 is configured to fix the respective swing arm 21 and the movable knob 272, wherein the screw nut 29 has a cavity 292 corresponding to the movable knob 272, and the screw nut 29 has an external screwing sections 291 configured to screw with inner threads 212 of the respective swing arm 21.

The brake unit B includes a protective sleeve 30 covered thereon, and the protective sleeve 30 has a hook 31 corresponding to the brake unit B.

When desiring to stop the bicycle, the brake cable L is driven to actuate the connection rod 11 of the multiple-rod structure 10, and the respective swing arm 21 of the brake unit B is driven by the connection rod 11 to actuate the respective piston 25 to engage with the stop disc D, thus stopping the bicycle easily and quickly.

While the preferred embodiments of the invention have been set forth for the purpose of disclosure, modifications of the disclosed embodiments of the invention and other embodiments thereof may occur to those skilled in the art. Accordingly, the appended claims are intended to cover all embodiments which do not depart from the scope of the invention.

## Claims

1. A multi-rod disc brake comprising:
a brake unit (B), the brake unit (B) including a locking structure (20), and the locking structure (20) having two symmetrical bases (24), two symmetrical swing arms (21), two symmetrical wear resistant sleeves (26), and two symmetrical pistons (25); wherein an accommodation chamber is defined between the two pistons (25) to accommodate a stop disc (D);
a respective base (24) is rotatably connected with a first rotary shaft (23) of a respective swing arm (21) and accommodates a respective wear resistant sleeve (26), the respective wear resistant sleeve (26) movably accommodates a respective piston (25), an end of the respective swing arm (21) is rotatably connected with the respective piston (25) by a first screw bolt (27) so that the respective swing arm (21) actuates the respective piston (25) to move in the respective wear resistant sleeve (26) reciprocately; and the respective swing arm (21) has a second rotary shaft (22) mounted on another end thereof;
a drive unit (A) includes a multiple-rod structure (10) mounted on the second rotary shaft (22) of the respective swing arm (21), wherein the second rotary shaft (22) is rotatably connected with a second screw bolt (131), the second screw bolt (131) is rotatably connected with a connecting portion (13) of a first end of a connection rod (11) so that the respective swing arm (21) actuates the connection rod (11) to swing via the second rotary shaft (22), wherein a second end of the connection rod (11) is rotatably connected with a respective third rotary shaft (12) of two third rotary shafts (12), the respective third rotary shaft (12) has a second locating orifice (121) defined on a central section thereof, and the second locating orifice (121) of the respective third rotary shaft (12) is connected with a first extension (152) of a first joining cable (15) or a second extension (162) of a second joining cable (16), wherein each of the first extension (152) and the second extension (162) is connected with a resilient element (14), the first joining cable (15) has a first receiving orifice (151), and the second joining cable (16) has a second receiving orifice (161), such that a brake cable (L) is inserted through the first receiving orifice (151) and the second receiving orifice (161) to be fixed by a fixing element (L1).

2. The multi-rod disc brake as claimed in claim 1, **characterized in that** the respective piston (25) has an actuation knob (28) received therein, and the actuation knob (28) has a threaded recess (281) defined on a side thereof and configured to screw with outer threads of the first screw bolt (27), wherein the first screw bolt (27) has a notch (273) defined on an end thereof, and the respective swing arm (21) has a third locating orifice (213) corresponding to the notch (273), the first screw bolt (27) further has a movable knob (272) fixed on another end thereof, and the respective swing arm (21) has a spherical trough (211) rotatably connected with the movable knob (272) of the first screw bolt (27).

3. The multi-rod disc brake as claimed in claim 2, **characterized in that** a screw nut (29) is configured to fix the respective swing arm (21) and the movable knob (272), wherein the screw nut (29) has a cavity (292) corresponding to the movable knob (272), and the screw nut (29) has an external screwing sections (291) configured to screw with inner threads (212) of the respective swing arm (21).

4. The multi-rod disc brake as claimed in claim 1, **characterized in that** the brake unit (B) includes a protective sleeve (30) covered thereon, and the protective sleeve (30) has a hook (31) corresponding to the brake unit (B).

## Patentansprüche

1. - Mehrstangen-Lamellenbremse, umfassend:
eine Bremseinheit (B), wobei die Bremseinheit (B) eine Verriegelungsstruktur (20) beinhaltet, und wobei die Verriegelungsstruktur (20) zwei symmetrische Basen (24), zwei symmetrische Schwenkarme (21), zwei symmetrische verschleißfeste Hülsen (26) und zwei symmetrische Kolben (25) aufweist,
wobei eine Aufnahmekammer zwischen den zwei Kolben (25) definiert ist, um eine Anschlaglamelle (D) aufzunehmen;
eine entsprechende Basis (24) drehbar mit einer ersten Drehwelle (23) eines entsprechenden Schwenkarms (21) verbunden ist und eine entsprechende verschleißfeste Hülse (26) aufnimmt, wobei die entsprechende verschleißfeste Hülse (26) beweglich einen entsprechenden Kolben (25) aufnimmt, ein Ende des entsprechenden Schwenkarms (21) durch einen ersten Schraubenbolzen (27) mit dem entsprechenden Kolben (25) drehbar verbunden ist, so dass der entsprechende Schwenkarm (21) den entsprechenden Kolben (25) betätigt, um sich in der entsprechenden verschleißfesten Hülse (26) reziprok zu bewegen; und der entsprechende Schwenkarm (21) eine zweite Drehwelle (22) aufweist, die auf ein anderes Ende davon montiert ist;
eine Antriebseinheit (A) eine Mehrstangenstruktur (10) beinhaltet, die auf die zweite Drehwelle (22) des entsprechenden Schwenkarms (21) montiert ist, wobei die zweite Drehwelle (22) drehbar mit einem zweiten Schraubenbolzen (131) verbunden ist, der zweite Schraubenbolzen (131) drehbar mit einem Verbindungsabschnitt (13) eines ersten Endes einer Verbindungsstange (11) verbunden ist, so dass der entsprechende Schwenkarm (21) die Verbindungsstange (11) betätigt, um mit Hilfe der zweiten Drehwelle (22) zu schwenken, wobei ein zweites Ende der Verbindungsstange (11) drehbar mit einer entsprechenden dritten Drehwelle (12) von zwei dritten Drehwellen (12) verbunden ist, die entsprechende dritte Drehwelle (12) eine zweite Positionierungsöffnung (121) aufweist, die auf einem zentralen Abschnitt davon definiert ist, und die zweite Positionierungsöffnung (121) der entsprechenden dritten Drehwelle (12) mit einer ersten Erweiterung (152) eines ersten Verbindungskabels (15) oder einer zweiten Erweiterung (162) eines zweiten Verbindungskabels (16) verbunden ist, wobei jede der ersten Erweiterung (152) und der zweiten Erweiterung (162) mit einem elastischen Element (14) verbunden ist, das erste Verbindungskabel (15) eine erste Aufnahmeöffnung (151) aufweist und das zweite Verbindungskabel (16) eine zweite Aufnahmeöffnung (161) aufweist, so dass ein Bremskabel (L) durch die erste Aufnahmeöffnung (151) und die zweite Aufnahmeöffnung (161) eingeführt wird, um durch ein Befestigungselement (L1) befestigt zu werden.

2. - Mehrstangen-Lamellenbremse nach Anspruch 1, **dadurch gekennzeichnet, dass** im entsprechenden Kolben (25) ein Betätigungsknopf (28) aufgenommen ist und der Betätigungsknopf (28) eine gewindegeschnitten Aussparung (281) aufweist, die auf einer Seite davon definiert und konfiguriert ist, um in das Außengewinde des ersten Schraubenbolzens (27) einzuschrauben, wobei der erste Schraubenbolzen (27) eine Kerbe (273) aufweist, die auf einem Ende davon definiert ist, und der entsprechende Schwenkarm (21) eine dritte Positionierungsöffnung (213) aufweist, die der Kerbe (273) entspricht, der erste Schraubenbolzen (27) weiter einen beweglichen Knopf (272) aufweist, der an ein anderes Ende davon befestigt ist, und der entsprechende Schwenkarm (21) eine sphärische Wanne (211) aufweist, die drehbar mit dem beweglichen Knopf (272) des ersten Schraubenbolzens (27) verbunden ist.

3. - Mehrstangen-Lamellenbremse nach Anspruch 2, **dadurch gekennzeichnet, dass** eine Schraubenmutter (29) konfiguriert ist, um den entsprechenden Schwenkarm (21) und den beweglichen Knopf (272) zu befestigen, wobei die Schraubenmutter (29) einen Hohlraum (292) aufweist, der dem beweglichen Knopf (272) entspricht, und die Schraubenmutter (29) einen externen Schraubenabschnitt (291) aufweist, der konfiguriert ist, um in die Innengewinde (212) des entsprechenden Schwenkarms (21) einzuschrauben.

4. - Mehrstangen-Lamellenbremse nach Anspruch 1, **dadurch gekennzeichnet, dass** die Bremseinheit (B) eine Schutzhülse (30) beinhaltet, die sich darauf befindet, und die Schutzhülse (30) einen Haken (31) aufweist, der der Bremseinheit (B) entspricht.

## Revendications

1. - Frein à disque à multiples bielles comprenant :
une unité de frein (B), l'unité de frein (B) comprenant une structure de verrouillage (20), et la structure de verrouillage (20) ayant deux bases symétriques (24), deux bras oscillants symétriques (21), deux manchons symétriques résistant à l'usure (26) et deux pistons symétriques (25) ; une chambre de réception étant définie entre les deux pistons (25) pour recevoir un disque d'arrêt (D) ;
une base respective (24) est reliée de manière rotative à un premier arbre rotatif (23) d'un bras oscillant respectif (21) et reçoit un manchon résistant à l'usure respectif (26), le manchon résistant à l'usure respectif (26) reçoit de manière mobile un piston respectif (25), une extrémité du bras oscillant respectif (21) est reliée de manière rotative au piston respectif (25) par un premier boulon à vis (27) de telle sorte que le bras oscillant respectif (21) actionne le piston respectif (25) pour se déplacer dans le manchon résistant à l'usure respectif (26) en va-et-vient ; et le bras oscillant respectif (21) a un deuxième arbre rotatif (22) monté sur une autre extrémité de celui-ci ;
une unité d'entraînement (A) comprend une structure à multiples bielles (10) montée sur le deuxième arbre rotatif (22) du bras oscillant respectif (21), le deuxième arbre rotatif (22) étant relié de manière rotative à un second boulon à vis (131), le second boulon à vis (131) étant relié de manière rotative à une partie de liaison (13) d'une première extrémité d'une bielle (11) de telle sorte que le bras oscillant respectif (21) actionne la bielle (11) pour osciller par l'intermédiaire du deuxième arbre rotatif (22), une seconde extrémité de la bielle (11) étant reliée de manière rotative à un troisième arbre rotatif respectif (12) de deux troisièmes arbres rotatifs (12), le troisième arbre rotatif respectif (12) ayant un deuxième orifice de positionnement (121) défini sur une section centrale de celui-ci, et le deuxième orifice de positionnement (121) du troisième arbre rotatif respectif (12) étant relié à une première extension (152) d'un premier câble de jonction (15) ou à une seconde extension (162) d'un second câble de jonction (16), chacune de la première extension (152) et de la seconde extension (162) étant reliée à un élément élastique (14), le premier câble de jonction (15) ayant un premier orifice de réception (151), et le second câble de jonction (16) ayant un second orifice de réception (161), de telle sorte qu'un câble de frein (L) est introduit à travers le premier orifice de réception (151) et le second orifice de réception (161) pour être fixé par un élément de fixation (L1) .

2. - Frein à disque à multiples bielles selon la revendication 1, **caractérisé par le fait que** le piston respectif (25) a un bouton d'actionnement (28) reçu à l'intérieur de celui-ci, et le bouton d'actionnement (28) a un évidement fileté (281) défini sur un côté de celui-ci et configuré pour se visser avec des filetages extérieurs du premier boulon à vis (27), le premier boulon à vis (27) ayant une encoche (273) définie sur une extrémité de celui-ci, et le bras oscillant respectif (21) ayant un troisième orifice de positionnement (213) correspondant à l'encoche (273), le premier boulon à vis (27) ayant en outre un bouton mobile (272) fixé sur une autre extrémité de celui-ci, et le bras oscillant respectif (21) ayant un creux sphérique (211) relié de manière rotative au bouton mobile (272) du premier boulon à vis (27).

3. - Frein à disque à multiples bielles selon la revendication 2, **caractérisé par le fait qu'**un écrou à vis (29) est configuré pour fixer le bras oscillant respectif (21) et le bouton mobile (272), l'écrou à vis (29) ayant une cavité (292) correspondant au bouton mobile (272), et l'écrou à vis (29) ayant des sections de vissage externes (291) configurées pour se visser avec des filetages intérieurs (212) du bras oscillant respectif (21).

4. - Frein à disque à multiples bielles selon la revendication 1, **caractérisé par le fait que** l'unité de frein (B) comprend un manchon de protection (30) recouvert sur celle-ci, et le manchon de protection (30) a un crochet (31) correspondant à l'unité de frein (B).
